# EUROPÄISCHE PATENTANMELDUNG

(11) **EP 2 302 873 A1**
(43) Veröffentlichungstag der Anmeldung: **30.03.2011**
(21) Anmeldenummer: 10172225.4
(22) Anmeldetag: 06.08.2010
(51) Int. Cl.: H04L 29/12

(54) **Verfahren zur Zuweisung von individuellen Adressen zu Bus-Geräten**

(30) Priorität: 24.09.2009 DE 102009042926
(71) Anmelder: Siemens Aktiengesellschaft, 80333 München (DE)
(72) Erfinder: Hoch, Peter, 93080, Pentling (DE)

(57) **Zusammenfassung**

Die vorliegende Erfindung betrifft ein Verfahren zur Zuweisung von individuellen Adressen zu Bus-Geräten, die an einen Bus eines Bus-Systems angeschlossen sind, wobei das Verfahren durch folgende Schritte gekennzeichnet ist:
a) ein Inbetriebnahmetool sendet über den Bus eine Suchanfrage an die Bus-Geräte,
b) das Inbetriebnahmetool weist allen gefundenen Bus-Geräten eine individuelle Adresse zu,
c) Ansteuerung einer Signalisierungsanzeige bei allen Bus-Geräten, denen eine individuelle Adresse durch das Inbetriebnahmetool zugewiesen wurde, zur Anzeige des Programmiermodus;
d) optisches Erkennen durch einen Benutzer der Bus-Geräte, bei denen die Signalisierungsanzeige keinen Programmiermodus anzeigt,
e) Drücken der Programmiertaste eines Bus-Gerätes, bei dem die Signalisierungsanzeige keinen Programmiermodus anzeigt, um dieses in den Programmiermodus zu versetzen, und automatisches Ausschalten aller Signalisierungsanzeigen der bereits gefundenen Bus-Geräte,
f) Zuweisen einer individuellen Adresse durch das Inbetriebnahmetool zu dem durch Drücken der Programmiertaste in den Programmiermodus versetzten Bus-Gerät,
g) Wiederholen der Schritte c) bis f) bis optisch durch einen Benutzer festgestellt wird, dass nach dem Einschalten der Signalisierungsanzeigen der Bus-Geräte die Signalisierungsanzeigen aller Bus-Geräte einen Programmiermodus anzeigen und/oder bis die Anzahl und/oder der Typ der gefundenen Geräten, den projektierten Geräten entspricht.

## Beschreibung

Die vorliegende Erfindung betrifft ein Verfahren zur Zuweisung von individuellen Adressen zu Bus-Geräten, die an einen Bus eines Bus-Systems angeschlossen sind.

Es ist in der konventionellen Gebäudetechnik bekannt, dass einzelne Anlagenteile, sog. Gewerke, wie die Beleuchtung, die Beschattung, die Heizung, eine Alarmanlage, etc., separat geplant und mit verschiedenen Systemen ausgeführt werden. Mit steigendem Komfort und zunehmender Funktionalität wird diese konventionelle Gebäudetechnik aufwändig, unübersichtlich und teuer. Nur mit hohem technischem Aufwand kann eine Verbindung zwischen den Gewerken, z.B. für eine gemeinsame Bedienung, erreicht werden.

Die Nachfrage an Gebäudemanagementsystemen nimmt kontinuierlich zu. D.h., die Managementanforderungen an eine Gebäudeklimatisierung, eine Gebäudebeleuchtung, eine Zugangskontrolle zum Gebäude, etc. nehmen ständig zu. Dies ist nur durch ein Gebäudemanagementsystem realisierbar, bei dem eine intelligente Steuerung und Überwachung aller eingesetzten Gewerke durchgeführt wird.

Mit EIB (EIB = Europäischer Installationsbus) oder KNX (KNX ist ein offener Standard für die Vernetzung und Steuerung von Gebäudetechnik (ehemals EIB)) wurden Gebäudemanagementsysteme entwickelt, die für alle wichtigen Anlagen in der Gebäudetechnik eingesetzt werden können. Durch EIB oder KNX können die einzelnen Gewerke gemeinsam geplant und ausgeführt werden. Derartige Gebäudemanagementsysteme stellen sicher, dass Steuerungsinformationen an alle Gewerke der Gebäudeautomation weitergeleitet werden und dass alle Gewerke in einer gemeinsamen Sprache kommunizieren.

Bei KNX sind alle Bus-Geräte über ein entsprechendes Übertragungsmedium, beispielsweise eine verdrillte Zweidrahtleitung, ein Powerline-Kabel, eine Funkverbindung oder eine IP/Ethernet-Leitung, verbunden, um Informationen auszutauschen. Bus-Geräte können entweder Sensoren oder Aktoren sein, die für die Steuerung der Gebäudeautomation gebraucht werden, wie zum Beispiel für die Gebäudebeleuchtung oder Gebäudebeschattung, für Sicherheitssysteme, für das Energiemanagement, für die Heizung, Lüftung und Klimatisierung, für Alarm- und Überwachungssysteme, für Schnittstellen zur Wartung und zur Gebäudeüberwachung, für Audio- und Videosteuerungen von Haushaltsgeräten. Alle diese Funktionen können durch ein einheitliches System gesteuert, überwacht und durch Alarme gesichert werden, ohne dass zusätzliche Steuerzentralen notwendig sind.

Für eine individuelle Ansteuerung benötigt jeder Bus-Teilnehmer bzw. jedes Bus-Gerät eine individuelle Adresse. D.h., bei der Inbetriebnahme eines Bus-Gerätes, wie eines EIB-Gerätes oder eines KNX-Gerätes, muss dem Bus-Gerät erst eine individuelle Adresse zugewiesen bzw. einprogrammiert werden. Die individuelle Adresse legt die Position des Bus-Gerätes innerhalb des Bus-Systems, beispielsweise des EIB-Systems oder des KNX-Systems, fest. Zum Beispiel bedeutet die individuelle Adresse 1.3.18, dass sich das Bus-Gerät in der Linie 3 des 1ten Bereiches befindet und dort, das heißt in der Linie 3, das 18te Gerät darstellt. Nach der Festlegung der individuellen Adresse kann das Bus-Gerät individuell angesteuert werden und eine gewünschte Applikation bzw. Funktionsprogrammierung geladen werden.

Zur Vergabe einer individuellen Adresse an ein Bus-Gerät, insbesondere ein KNX-Gerät, ist es bekannt, dass zunächst eine Programmiertaste des Bus-Gerätes gedrückt werden muss. Wenn die Programmiertaste des Bus-Gerätes gedrückt ist, leuchtet beispielsweise die Programmier-LED des Bus-Gerätes und der Programmiermodus des Bus-Gerätes ist aktiviert. Mit einem speziellen Inbetriebnahmetool bzw. einer speziellen Inbetriebnahmesoftware, beispielsweise der ETS (ETS = Engineering Tool Software) oder einem KNX-Inbetriebnahmetool, kann dem entsprechenden Bus-Gerät dann eine individuelle Adresse zugewiesen werden.

Bei modernen Bus-Geräten, wie KNX-Geräten, ist es möglich, dass die Bus-Geräte durch ein Inbetriebnahmetool automatisch ihre individuelle Adresse (IA) erhalten. Derartige Bus-Geräte weisen vorzugsweise eine sogenannte BCU (BCU = Bus Coupling Unit) auf. Die BCU dient der Kommunikation mit dem EIB/KNX-System, d.h., die BCU verbindet Applikationsprogramme mit dem Bus des Bus-Systems. Die BCU kann vorzugsweise in ein Bus-Gerät, wie einem Sensor oder Aktor, integriert sein.

Die automatische Zuweisung von individuellen Adressen zu Bus-Geräten funktioniert jedoch nur bei modernen Bus-Geräten, wie Bus-Geräten, die beispielsweise eine BCU der Version 2.0 oder größer aufweisen.

Problematisch ist es, wenn sich in einem Projekt, d.h. an einem Bus, neben modernen Bus-Geräten, deren voreingestellte Adresse 0xFFFF ist, d.h. denen noch keine individuelle Adresse zugewiesen ist, ein oder mehrere "ältere" Bus-Geräte befinden, denen mit einem Inbetriebnahmetool automatisch keine individuelle Adresse zugewiesen werden kann, beispielsweise weil diese Bus-Geräte schon eine individuelle Adresse ungleich 0xFFFF aufweisen. Sind beispielsweise zehn Bus-Geräte an einem Bus angeschlossen, von denen neun Bus-Geräte modern sind und das Inbetriebnahmetool stützen, ein Bus-Gerät jedoch nicht von dem Inbetriebnahmetool ansteuert werden kann, kann nur den neun modernen Bus-Geräten eine individuelle Adresse zugewiesen werden, deren voreingestellte Adresse gleich 0xFFFF ist. D.h., die neun modernen Bus-Geräte werden von dem Inbetriebnahmetool gefunden und das Inbetriebnahmetool kann diesen neun Bus-Geräten eine individuelle Adresse zuweisen. Das eine ältere Bus-Gerät, dessen voreingestellte Adresse ungleich 0xFFFF ist, kann von dem Inbetriebnahmetool nicht gefunden werden. Dem Benutzer zeigt das Inbetriebnahmetool an, dass neun Bus-Geräte gefunden wurden und diesen jeweils eine individuelle Adresse zugewiesen wurde. Das zehnte Bus-Gerät wird nicht durch das Inbetriebnahmetool gefunden und dementsprechend dem Benutzer auch nicht angezeigt. Dem Benutzer ist aus der Projektierung die Anzahl der Geräte bekannt. Außerdem kann das Inbetriebnahmetool darauf hinweisen, dass sich im projektierten Projekt mehr Bus-Geräte befinden als in der Anlage gefunden wurden.

D.h., um auszuschließen, dass ein Bus-Gerät nicht gefunden wird und diesem keine individuelle Adresse zugewiesen werden kann, ist es bislang erforderlich, dass bei allen Bus-Geräten eines Projektes die Programmiertaste gedrückt werden muss. Bislang unterstützt die ETS keine automatische Vergabe der individuellen Adressen. Es muss also immer bei allen Bus-Geräten nacheinander die Programmiertaste gedrückt werden. Dies ist erforderlich, da dem Benutzer nicht bekannt ist, welches der Bus-Geräte nicht gefunden wurde. D.h., es muss im ungünstigsten Fall bei allen Bus-Geräten, in dem vorherigen Beispiel bei allen 10 Bus-Geräten, nacheinander die Programmiertaste gedrückt werden. Bei einer Vielzahl von Bus-Geräten dauert dies per se lange. Da die Bus-Geräte teilweise schwer zugänglich sind, beispielsweise an Decken montiert sind, ist dies zum Teil sehr aufwendig.

Eine weitere Möglichkeit um auszuschließen, dass ein Bus-Gerät nicht gefunden wird und diesem keine individuelle Adresse zugewiesen werden kann, besteht darin, den gesamten Bus des Bus-Systems abzuscannen. Dies dauert bei 65535 möglichen Adressen jedoch ebenfalls sehr lange. Wenn dann zwei Bus-Geräte die gleiche Adresse aufweisen, kann mit dem Ergebnis nichts angefangen werden, da die Bus-Geräte nicht eindeutig angesprochen werden können. Durch das Abscannen aller Bus-Geräte erkennt der Benutzer immer noch nicht welches konkrete Bus-Gerät noch keine individuelle Adresse erhalten hat.

Der Erfindung liegt daher die Aufgabe zugrunde ein Verfahren zur Zuweisung von individuellen Adressen zu Bus-Geräten eines Bus-Systems bereitzustellen, durch das die Zuweisung der individuellen Adressen zu allen Bus-Geräten vereinfacht wird.

Diese Aufgabe wird erfindungsgemäß durch ein Verfahren zur Zuweisung von individuellen Adressen zu Bus-Geräten mit den Merkmalen gemäß dem unabhängigen Patentanspruch 1 gelöst. Weitere Merkmale und Details der Erfindung ergeben sich aus den Unteransprüchen sowie der Beschreibung

D.h., die Aufgabe wird bei einem Verfahren zur Zuweisung von individuellen Adressen zu Bus-Geräten, die an einen Bus eines Bus-Systems angeschlossen sind, dadurch gelöst, dass folgende Verfahrensschritte durchgeführt werden:
a) ein Inbetriebnahmetool sendet über den Bus eine Suchanfrage an die Bus-Geräte,
b) das Inbetriebnahmetool weist allen gefundenen Bus-Geräten eine individuelle Adresse zu,
c) Ansteuerung einer Signalisierungsanzeige bei allen Bus-Geräten, denen eine individuelle Adresse durch das Inbetriebnahmetool zugewiesen wurde, zur Anzeige des Programmiermodus;
d) optisches Erkennen durch einen Benutzer der Bus-Geräte, bei denen die Signalisierungsanzeige keinen Programmiermodus anzeigt,
e) Drücken der Programmiertaste eines Bus-Gerätes, bei dem die Signalisierungsanzeige keinen Programmiermodus anzeigt, um dieses in den Programmiermodus zu versetzen, und automatisches Ausschalten aller Signalisierungsanzeigen durch das Inbetriebnahmetool der bereits gefundenen Bus-Geräte,
f) Zuweisen einer individuellen Adresse durch das Inbetriebnahmetool zu dem durch Drücken der Programmiertaste in den Programmiermodus versetzten Bus-Gerät,
g) Wiederholen der Schritte c) bis f) bis optisch durch einen Benutzer festgestellt wird, dass nach dem Einschalten der Signalisierungsanzeigen der Bus-Geräte die Signalisierungsanzeigen aller Bus-Geräte einen Programmiermodus anzeigen und/oder die Anzahl der projektierten Bus-Geräte der Anzahl der gefundenen Bus-Geräte entspricht.

Bus-Geräte, die an einem Bus, d.h. einem Installationsbus, eines Bus-Systems angeschlossen bzw. angekoppelt sind, können Sensoren oder Aktoren sein, die für die Steuerung der Gebäudeautomation gebraucht werden. Beispielsweise können die Bus-Geräte Sensoren oder Aktoren für die Gebäudebeleuchtung oder Gebäudebeschattung, für Sicherheitssysteme, für das Energiemanagement, für die Heizung, Lüftung und Klimatisierung, für Alarm- und Überwachungssysteme, für Schnittstellen zur Wartung und zur Gebäudeüberwachung, für Audio- und Videosteuerungen von Haushaltsgeräten sein.

Ein Vorteil dieses Verfahren liegt darin, dass es bei der automatischen Vergabe bzw. Zuweisung der individuellen Adressen zu den Bus-Geräten möglich ist, sehr einfach und schnell die nicht gefundenen Bus-Geräte zu finden, denen automatisch keine individuelle Adresse zugewiesen werden konnte. Dies erfolgt durch eine optische Erkennung. D.h., ein Benutzer erkennt optisch die Bus-Geräte, bei denen die Signalisierungsanzeige, beispielsweise eine Programmier-Anzeige, keinen Programmiermodus anzeigt. Beispielsweise kann über eine mechanische Anzeige kenntlich gemacht werden, dass diesem Bus-Gerät bereits eine individuelle Adresse zugeteilt worden ist. Alternativ kann die Signalisierungsanzeige diesen Zustand, d.h. eine bereits stattgefundene Vergabe einer individuellen Adresse farblich kennzeichnen. Hierzu kann ein Farbelement, beispielsweise in ein Sichtfenster, mechanisch eingefügt werden. So kann eine erste Farbe anzeigen, dass das Bus-Gerät bereits eine Individuelle Adresse erhalten hat, und eine zwei Farbe kann anzeigen, dass das Bus-Gerät nicht im Programmiermodus ist. Durch die optische Erkennung der Signalisierungsanzeige kann schnell und einfach erkannt werden, dass einem Bus-Gerät noch keine individuelle Adresse zugeordnet worden ist.

In einem ersten Schritt sendet ein Inbetriebnahmetool über den Bus des Bus-Systems eine Suchanfrage an die Bus-Geräte. Moderne Bus-Geräte, deren voreingestellte Adresse auf 0xFFFF eingestellt ist, d.h. denen noch keine individuelle Adresse zugewiesen wurde, werden durch die Suchanfrage gefunden, während ältere Geräte und Geräte deren individuelle Adresse ungleich 0xFFFF ist, durch die Suchanfrage nicht gefunden werden. Diese Vorgehensweise ist möglich, da der KNX Standard eine Möglichkeit umfasst die Bus-Geräte über ihre bekannten Seriennummer anzusprechen. D.h. bei modernen Bus-Geräten erhält das Inbetriebnahmetool die Seriennummern der Bus-Geräte. Allen gefundenen Bus-Geräten, bei denen die voreingestellte Adresse auf 0xFFFF eingestellt ist, weist das Inbetriebnahmetool nun eine individuelle Adresse zu. Die erfolgt automatisch durch das Inbetriebnahmetool, beispielsweise ein KNX-Inbetriebnahmetool. Nach dem Zuweisen der individuellen Adressen zu denjenigen Bus-Geräten, die von dem Inbetriebnahmetool gefunden worden sind, wird eine Signalisierungsanzeige bei diesen Bus-Geräten angesteuert. Hierzu sendet eine entsprechende Einrichtung, vorzugsweise das Inbetriebnahmetool, ein Einschaltsignal über den Bus des Bus-Systems zu allen Bus-Geräten, denen bereits eine individuelle Adresse zugewiesen bzw. einprogrammiert worden ist. Nach dem Empfang des Einschaltsignals schalten alle Bus-Geräte, denen durch das Inbetriebnahmetool eine individuelle Adresse zugewiesen bzw. einprogrammiert worden ist, ihre Signalisierungsanzeige, insbesondere ihre Programmier-Anzeige, ein, wodurch angezeigt wird, dass der Programmiermodus dieser Bus-Geräte aktiviert ist. Dabei kann die Signalisierungsanzeige verschiedenartig ausgebildet sein. So kann die Signalisierungsanzeige beispielsweise ein Leuchtmittel sein, das einen aktivierten Programmiermodus durch Leuchten des Leuchtmittels kenntlich machen kann. Ferner kann die Signalisierungsanzeige eine Farbanzeige umfassen. Beispielsweise kann eine erste Farbe anzeigen, dass das Bus-Gerät eine individuelle Adresse erhalten hat, und eine zweite Farbe anzeigen, ob das Bus-Gerät im Programmiermodus ist. Besonders bevorzugt umfasst die Signalisierungsanzeige, insbesondere die Programmier-Anzeige, eines Bus-Gerätes eine Programmier-LED, die zur Anzeige eines aktivierten Programmiermodus leuchtet. Durch die Signalisierungsanzeige, insbesondere eine leuchtende Programmier-LED, erkennt der Benutzer, dass diesen Bus-Geräten bereits eine individuelle Adresse zugewiesen worden ist. Das Einschalten der Signalisierungsanzeige, insbesondere der Programmier-LED, ist nur bei Bus-Geräten möglich, die über eine individuelle Adresse angesteuert werden können. Alle Bus-Geräte, bei denen die Signalisierungsanzeige keinen Programmiermodus anzeigt, d.h. beispielsweise die Programmier-LED nicht leuchtet, sind durch das Inbetriebnahmetool nicht gefunden worden, da diesen Bus-Geräten noch keine individuelle Adresse zugeteilt worden ist. Nach dem optischen Erkennen dieser Bus-Geräte, bei dem die Signalisierungsanzeige keinen Programmiermodus anzeigt, wird bei einem dieser Bus-Geräte die Programmiertaste gedrückt und das Bus-Gerät dadurch in den Programmiermodus versetzt. Das Drücken der Programmiertaste erfolgt durch den Benutzer, d.h. durch den Installateur. Ferner werden die Signalisierungsanzeigen bzw. die Programmier-Anzeigen der bereits gefundenen Bus-Geräte, insbesondere durch das Inbetriebnahmetool, automatisch wieder ausgeschaltet, so dass nur ein einziges Bus-Gerät sich im Programmiermodus befindet. Hierzu sendet eine Einrichtung, vorzugsweise das Inbetriebnahmetool, ein Ausschaltsignal an alle Bus-Geräte, die bereits eine individuelle Adresse haben. Durch das Ausschaltsignal wird bei diesen Bus-Geräten der Programmiermodus deaktiviert. Dies ist erforderlich, da zur Zuweisung einer individuellen Adresse zu einem zuvor nicht gefundenen Bus-Gerät durch das Inbetriebnahmetool nur dieses eine Bus-Gerät im Programmiermodus sein darf. D.h., bei den Bus-Geräten, die bereits eine individuelle Adresse aufweisen, wird der Programmiermodus deaktiviert. In einem weiteren Schritt wird dem durch Drücken der Programmiertaste in den Programmiermodus versetzten Bus-Gerät durch das Inbetriebnahmetool eine individuelle Adresse zugewiesen.

Hat die optische Erkennung ergeben, dass zwei oder mehr Bus-Geräte nicht von dem Inbetriebnahmetool gefunden worden sind und entsprechend noch keine individuellen Adresse aufweisen, wird das Verfahren wiederholt. D.h., es wird wieder bei allen Bus-Geräten, denen bereits eine individuelle Adresse zugewiesen wurde, eine Signalisierungsanzeige angesteuert, insbesondere eine Programmier-Anzeige eingeschaltet, und der Programmiermodus aktiviert. Der Benutzer erkennt anhand der nicht angesteuerten Signalisierungsanzeige, insbesondere der nicht eingeschalteten Programmier-Anzeige, das wenigstens eine weitere, nicht gefundene Bus-Gerät und drückt die Programmiertaste dieses Bus-Gerätes, um das Bus-Gerät in den Programmiermodus zu versetzen, d.h. den Programmiermodus dieses Bus-Gerätes zu aktivieren. Ferner werden automatisch über eine Einrichtung, insbesondere über das Inbetriebnahmetool, alle Signalisierungsanzeigen Programmier-Anzeigen der bereits gefundenen Bus-Geräte wieder abgeschaltet. Hierdurch wird deren Programmiermodus wieder deaktiviert. Nur bei dem Bus-Gerät, bei dem die Programmiertaste durch den Benutzer gedrückt worden ist, bleibt der Programmiermodus aktiv, da dieser aufgrund der noch fehlenden individuellen Adresse des Bus-Gerätes nicht von der Einrichtung, insbesondere dem Inbetriebnahmetool, ausgeschaltet werden kann. In einem weiteren Schritt weist das Inbetriebnahmetool diesem Bus-Gerät dann eine individuelle Adresse zu. Der Vorgang ist vorzugsweise im Inbetriebnahmetool automatisiert. Wenn keine Bus-Geräte mehr gefunden werden, zeigt das Inbetriebnahmetool eine Liste der noch fehlenden Bus-Geräte an und schaltet die Programmier LED bei allen gefundenen Geräten an. Der Benutzer erkennt dadurch die Bus-Geräte, denen noch eine individuelle Adresse fehlt.

Diese Schritte werden solange wiederholt, bis optisch durch den Benutzer festgestellt wird, dass nach dem Einschalten der Signalisierungsanzeigen bei allen Bus-Geräten die Signalisierungsanzeige einen Programmiermodus anzeigt. D.h., leuchten die Programmier-LED's aller an den Bus des Bus-Systems angeschlossenen Bus-Geräte, so weiß der Benutzer, dass allen Bus-Geräten eine individuelle Adresse zugewiesen worden ist.

Wie bereits zuvor erwähnt kann gemäß einer besonders zweckmäßigen Weiterbildung der Erfindung vorgesehen sein, dass die Signalisierungsanzeige eines Bus-Gerätes eine Programmier-LED umfasst, die zur Anzeige eines aktivierten Programmiermodus leuchtet.

Gemäß einer weiteren zweckmäßigen Weiterbildung der Erfindung kann bei dem Verfahren vorgesehen sein, dass das Bus-System ein KNX-Bussystem ist. Insbesondere bei einem KNX-Bussystem kann ein Inbetriebnahmetool eine automatische Zuweisung von individuellen Adressen an KNX-Geräte leicht vornehmen.

Gemäß einer weiteren zweckmäßigen Weiterbildung der Erfindung kann bei dem Verfahren vorgesehen sein, dass das Inbetriebnahmetool in Schritt b) allen Bus-Geräten eine individuelle Adresse zuweist, deren voreingestellte Adresse 0xFFFF anzeigt. Insbesondere vorteilhaft sind dabei Bus-Geräte mit einer BCU in der Version 2.0 oder höher. Diese Vorgehensweise ist möglich, da der KNX-Standard eine Möglichkeit umfasst die Bus-Geräte über ihre Seriennummer anzusprechen.

Das Einschalten und Ausschalten der Signalisierungsanzeigen, insbesondere der Programmier-Anzeigen, d.h. die Aktivierung und Deaktivierung des Programmiermodus, bei allen Bus-Geräten erfolgt vorzugsweise durch das Inbetriebnahmetool. Es ist aber auch denkbar, dass über eine andere Einrichtung das Einschalten und Ausschalten der Signalisierungsanzeigen bei allen Bus-Geräten erfolgt.

Gemäß einer weiteren besonders zweckmäßigen Weiterbildung der Erfindung kann bei dem Verfahren vorgesehen sein, dass das Bus-System zur Verbindung von Bus-Geräten in einem Gebäude ausgebildet ist.

Allgemein betrachtet umfasst ein EIB- oder KNX-System Sensoren, wie z.B. Taster oder Windmesser, die Befehle in Form von Telegrammen erzeugen, Aktoren, wie z.B. Schaltrelais für Licht oder Jalousien, welche die empfangenen Telegramme in Aktionen umsetzen, und einen Bus bzw. eine Busleitung, der/die alle Sensoren und Aktoren für den Telegrammverkehr miteinander verbindet.

Insbesondere das KNX-System, d.h. der KNX-Bus, eignet sich besonders zur Durchführung des Verfahrens. Der KNX-Bus des KNX-Systems ist mit dem EIB-Bus abwärtskompatibel. Als Übertragungsmedium kommen beispielsweise eine verdrillte Zweidrahtleitung, ein sogenanntes Powerline-Kabel (PL132), eine IP/Ethernet-Leitung oder Funk- und Infrarottechniken in Betracht. Der Datentransfer kann auf dem Konnex-Bus als verbindungslose und verbindungsorientierte Punkt-zu-Punkt-Verbindung, in Multicast und als Broadcast erfolgen.

## Patentansprüche

1. Verfahren zur Zuweisung von individuellen Adressen zu Bus-Geräten, die an einen Bus eines Bus-Systems angeschlossen sind, wobei das Verfahren durch folgende Schritte **gekennzeichnet** ist:
a) ein Inbetriebnahmetool sendet über den Bus eine Suchanfrage an die Bus-Geräte,
b) das Inbetriebnahmetool weist allen gefundenen Bus-Geräten eine individuelle Adresse zu,
c) Ansteuerung einer Signalisierungsanzeige bei allen Bus-Geräten, denen eine individuelle Adresse durch das Inbetriebnahmetool zugewiesen wurde, zur Anzeige des Programmiermodus;
d) optisches Erkennen durch einen Benutzer der Bus-Geräte, bei denen die Signalisierungsanzeige keinen Programmiermodus anzeigt,
e) Drücken der Programmiertaste eines Bus-Gerätes, bei dem die Signalisierungsanzeige keinen Programmiermodus anzeigt, um dieses in den Programmiermodus zu versetzen, und automatisches Ausschalten aller Signalisierungsanzeigen der bereits gefundenen Bus-Geräte,
f) Zuweisen einer individuellen Adresse durch das Inbetriebnahmetool zu dem durch Drücken der Programmiertaste in den Programmiermodus versetzten Bus-Gerät,
g) Wiederholen der Schritte c) bis f) bis optisch durch einen Benutzer festgestellt wird, dass nach dem Einschalten der Signalisierungsanzeigen der Bus-Geräte die Signalisierungsanzeigen aller Bus-Geräte einen Programmiermodus anzeigen und/oder bis die Anzahl und/oder der Typ der gefundenen Geräten, den projektierten Geräten entspricht.

2. Verfahren nach Anspruch 1, **dadurch gekennzeichnet, dass** die Signalisierungsanzeige eines Bus-Gerätes eine Programmier-LED umfasst, die zur Anzeige eines aktivierten Programmiermodus leuchtet.

3. Verfahren nach Anspruch 1 oder 2, **dadurch gekennzeichnet, dass** das Bus-System ein KNX-Bussystem ist.

4. Verfahren nach mindestens einem der vorhergehenden Ansprüche, **dadurch gekennzeichnet, dass** das Inbetriebnahmetool in Schritt b) allen Bus-Geräten eine individuelle Adresse zuweist, deren voreingestellte Adresse 0xFFFF anzeigt.

5. Verfahren nach mindestens einem der vorhergehenden Ansprüche, **dadurch gekennzeichnet, dass** das Einschalten der Signalisierungsanzeigen bei allen Bus-Geräten durch das Inbetriebnahmetool erfolgt.

6. Verfahren nach mindestens einem der vorhergehenden Ansprüche, **dadurch gekennzeichnet, dass** das Bus-System zur Verbindungen von Bus-Geräten in einem Gebäude ausgebildet ist.
